# EUROPEAN PATENT SPECIFICATION

(11) **EP 1 592 734 B1**
(45) Date of publication and mention of the grant of the patent: **09.04.2008**
(21) Application number: 04710011.0
(22) Date of filing: 11.02.2004
(51) Int. Cl.: C08K 3/04, C08K 3/08, C08J 7/16, B01J 19/00, C08F 255/02

(54) **ELECTRICALLY CONDUCTIVE PLASTICS MOULDED ARTICLE**
ELEKTRISCH LEITFÄHIGER GEFORMTER PLASTIKARTIKEL
ARTICLE EN PLASTIQUE MOULE ELECTRO-CONDUCTEUR

(30) Priority: 12.02.2003 DE 10305957
(43) Date of publication of application: 09.11.2005
(73) Proprietor: Gesellschaft für Biotechnologische Forschung mbH (GBF), 38124 Braunschweig (DE)
(72) Inventor: FRANK, Ronald, 38527 Meine (DE); ZANDER, Norbert, 38524 Sassenburg (DE); DIKMANS, Antonius, 38106 Braunschweig (DE)
(74) Representative: Boeters, Hans Dietrich
(86) International application number: PCT/EP2004/001283
(87) International publication number: WO 2004/071151

(56) References cited:
- EP-A- 0 272 541
- WO-A-00/12575
- WO-A-00/36145
- WO-A-02/074841
- WO-A-02/093170
- WO-A-03/006373
- DE-A- 2 714 194
- GB-A- 2 171 410

## Description

MALDI-MS is a very gentle method of analysing, especially, highly sensitive biomolecules such as peptides, proteins, nucleic acids and analogues. For such a method, the biomolecules being investigated, which may also be present as mixtures in a specimen being investigated, are mixed with a solution of a matrix substance, such as sinapic acid, in a volatile solvent, then applied to a surface where they are deposited in the form of solid substances embedded in matrix crystals by evaporation of the solvent. Good crystallisation of the matrix substance is advantageous for a good analysis. By bombarding the deposited substances with a laser beam, ions are produced which are accelerated in an electrical voltage field and then detected. The time of flight of the ions over a fixed distance depends upon the ratio of the mass m to the electrical charge z of the ions (m/z). When the charge is known, accordingly the mass of the ions can be determined. That process is state of the art and is widely used in bioanalysis. Detailed information about MALDI-MS analysis is available in text books (Bioanalytik, Lottspeich & Zorbas Eds. (1998), Spektrum Akademischer Verlag, Heidelberg, Berlin, pp. 324-347) and equipment manufacturers' brochures.

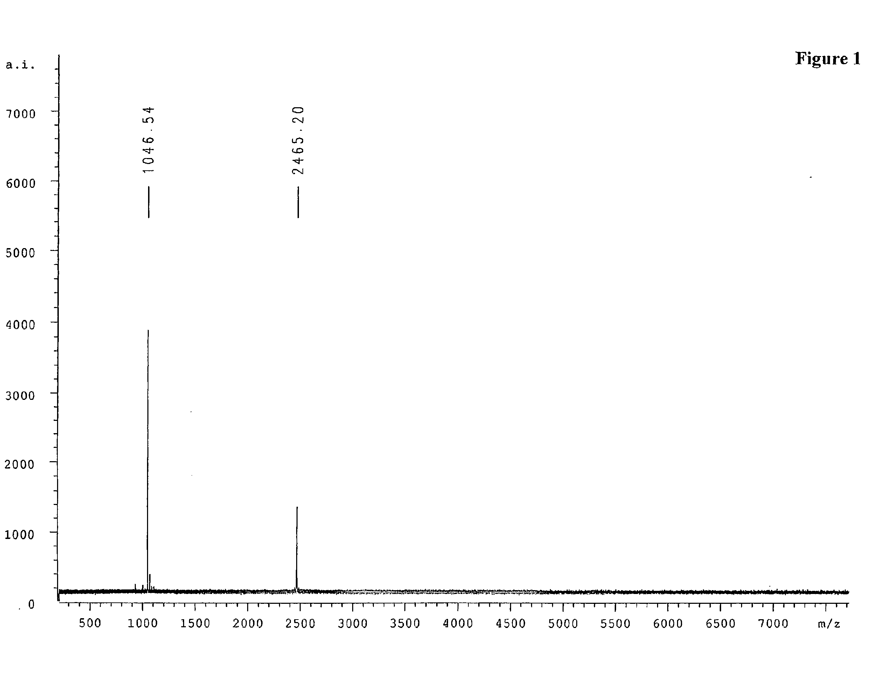

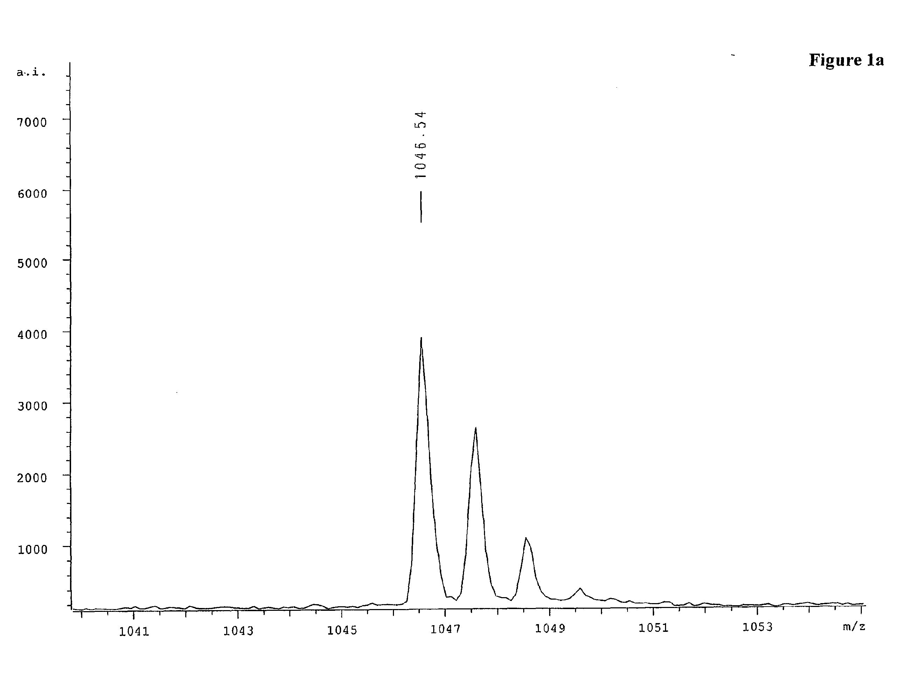

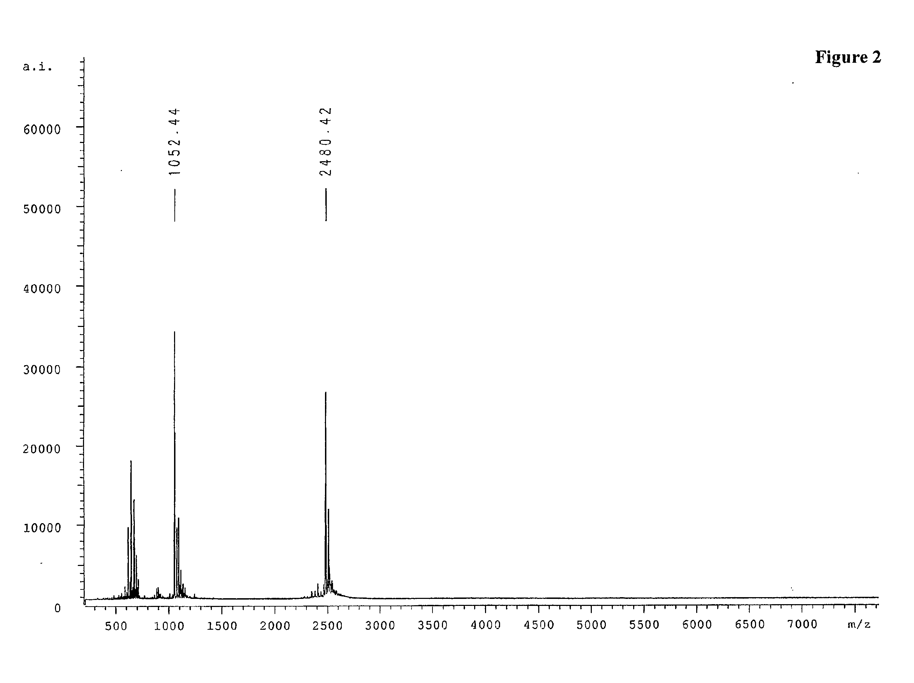

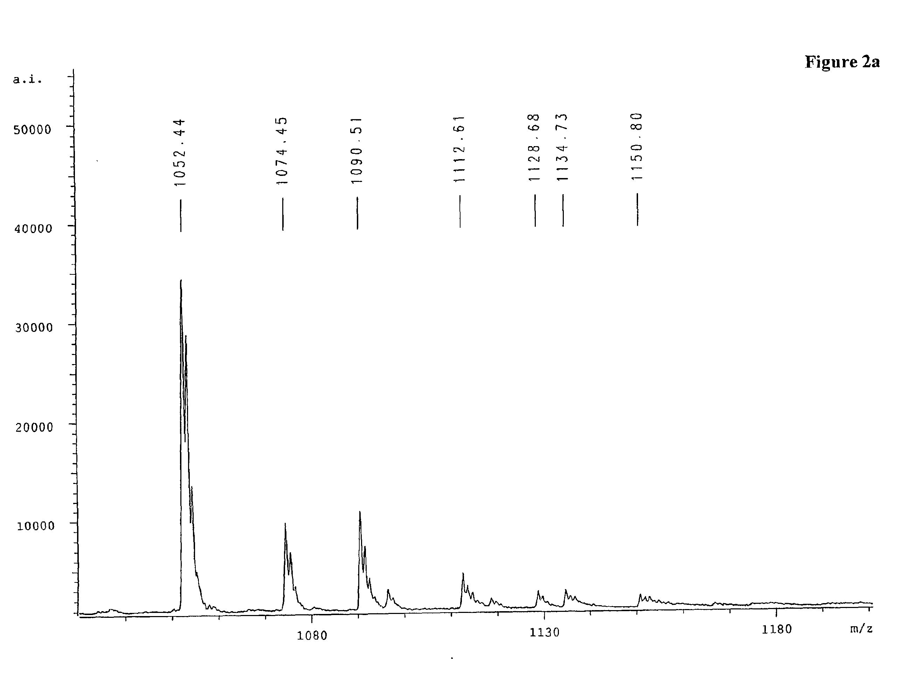

Because a large number of charges is generated during laser bombardment, surpluses and counter-charges need to be eliminated, because otherwise the measurement result will be adversely affected and the m/z values distorted. As MALDI substrate (often also referred to as the MALDI target) there are therefore predominantly used metals or coated metals. Figures 1 and 2 illustrate the effect of the electrical conductivity of the MALDI substrate using the example of a conventional metal surface in comparison with a non-conducting polypropylene surface.

In addition to the simple deposition of specimen biomolecules on the MALDI substrate, there are also used targets the surface of which is covered with so-called "capture compounds" which have a selective affinity for the biomolecules being investigated. The biomolecules from an applied specimen solution are thus selectively bonded to the wetted surface by affinity enrichment and only after the residual specimen solution has been washed off is the matrix added and the analysis carried out. Such a method is, for example, the SELDI process from CipherGen Inc. Capture compounds can be applied ion exchanger resins, hydrophobic media and also biological molecules themselves, such as lectins, protein A and many others.

It is desirable to be able to control and select the nature of the capture molecules as well as their diversity and number within a wide range in order that the greatest variety of biomolecules can be enriched and investigated in parallel simultaneously on a MALDI target surface. There come to mind here, for example, the great variety of protein molecules or nucleic acid sequences in a blood, cell or tissue sample. In order that a suitably wide variety of different selective capture molecules can be firmly applied one next to the other on a MALDl target surface it is possible to use methods of positionally addressable immobilisation such as are known from the field of array and microarray analysis. For that purpose, the MALDI target surface has to be chemically activated so that the capture molecules become covalently linked to the surface, where applicable by means of a so-called crosslinker, in a gentle reaction. Crosslinkers are reactive molecules which have been developed for the covalent linking of biomolecules such as proteins, nucleic acids or carbohydrates (see also Dent, E.H., Aslam, M., The preparation of Protein-Protein Conjugates, Bioconjugates, Dent, E.H., Aslam, M. (editors), Macmillan References, London, Basingstoke, 1998, 216-363 and also Dent, E.H., Aslam, M., The preparation of Protein-Small Molecule Conjugates, Bioconjugates, Dent, E.H., Aslam, M. (editors), Macmillan References, London, Basingstoke, 1998, 364-482). They may also be used, however, for the covalent linking of capture molecules to the surface. There are also biochemical complexes that have sufficient stability (such as e.g. the complex between biotin and streptavidin) and can be used for the immobilisation of capture molecules. In the latter case too, however, the biotin or streptavidin must first be chemically covalently linked to the surface, directly or using crosslinkers, before the capture molecule can be complexed. The immobilisation must result in a sufficiently high density in order that a sufficiently large number of biomolecules can be enriched at a later stage. The high sensitivity in the lower fmol range of the fluorescence measurements such as are achieved in array and microarray analysis is almost unobtainable using MALDI-MS and cannot be achieved at all when a plurality of different molecules of a family of biomolecules have to bind to the same capture molecule and be analysed at the same time.

An alternative to immobilisation is direct *in situ* chemical synthesis of the capture molecules on the MALDI target surface in accordance with the principles of positionally addressable chemical solid-phase synthesis such as, for example, the SPOT synthesis method. In this connection see:
"Verfahren zur schnellen Synthese von trägergebundenen oder freien Peptiden oder Oligonucleotiden, damit hergestelltes Flachmaterial, dessen Verwendung sowie Vorrichtung zur Durchführung des Verfahrens" - Frank, R. and Güler, S. (applicant: sold to Jerini BioTools GmbH, 1999) P 40 27 657.9, EP 91 914 577.1, US 5,830,637, Australia 96.42063, Japan 03.513 489, Norway 93.0613, Canada 2 090 485, Korea 93.700613.
Spot-Synthesis: An easy technique for the positionally addressable, parallel chemical synthesis on a membrane support - Frank, R. (1992) Tetrahedron, 48, 9217-9232. "Vorrichtung zur effektiven Erzeugung von frei definierbaren Repertoires/Bibliotheken mit grossen Anzahlen von Ligand- und Akzeptorstrukturen zur kombinatorischen Synthese und zur ultraschnellen Testdurchführung in der biologischen, biochemischen, pharmazeutischen, medizinischen und chemischen Wirkstoffforschung" - Frank, R., Zander, N., Melberg, Y., Gausepohl, H., Schneider-Mergener, J., Adler, F., Türk, G. (applicant: ABIMED Analysen-Technik GmbH, GBF, Jerini BioTools GmbH, MediUm TECH GmbH) P (1) 98 18 999.0, PCT/EP99/02811 High-density synthetic peptide microarrays: emerging tools for functional genomics and proteomics - Frank, R. (2002) Comb. Chem. & High Throughput Screening 5, 429-440.

Plastics materials of polymers such as polypropylene (PP), polyethylene (PE), polystyrene (PS), polysulfone, polytetrafluoroethylene (PTFE, Teflon®), polyester (PE), polycarbonates (PC), polyamides (PA), polymethylpentene (PMP), polyethylene/tetrafluoroethylene copolymer (ETFE), polytetrafluoroethylenelhexafluoropropylene copolymer (FEP) and many more [see also "Vorrichtung zur effektiven Erzeugung von frei definierbaren Repertoires/Bibliotheken mit grossen Anzahlen von Ligand-und Akzeptorstrukturen zur kombinatorischen Synthese und zur ultraschnellen Testdurchführung in der biologischen, biochemischen, pharmazeutischen, medizinischen und chemischen Wirkstoffforschung" - Frank, R., Zander, N., Melberg, Y., Gausepohl, H., Schneider-Mergener, J., Adler, F., Türk, G. (owner: ABIMED Analysen-Technik GmbH, GBF, Jerini BioTools GmbH, MediUm TECH GmbH) P (1) 98 18 999.0, PCT/EP99/02811] can be made into moulded articles of virtually any shape accurately and very economically in large numbers. Furthermore, plastics materials, especially polystyrenes and polyamides, have long been used successfully as supports in chemical solid-phase synthesis (Dörwald, F. Z., Organic Synthesis on Solid Phase, Wiley-VCH, Weinheim, New York, Chichester, Brisbane, Singapore, Toronto, 2000, 13-27). For the specific modification of plastics surfaces to suit a particular application there is a wide range of available methods and variants that extend far beyond the possibilities of metal surfaces.

The problem underlying the invention is solved by a use of an electrically conductive moulded article based on plastics according to claim 1.

The surface of the moulded article can carry a graft polymer or a graft copolymer carrying the captive compounds. The moulded article can consist of plastics.

The plastics can be a polymer based on polypropylene (PP), polyethylene (PE), polystyrene (PS), polysulfone, polytetrafluoroethylene (PTFE, Teflon), polyester (PE), polycarbonate (PC), polyamide (PA) and/or polymethylpentene (PMP).

The plastics can especially be polypropylene and/or polystyrene and/or polyamide.

Furthermore, the moulded article can have a surface resistance of less than 1 MΩ.

The moulded article can especially have a surface resistnce of less than 100 kΩ or of less than 10 kΩ or of not more than 1 kΩ or of less than 1 kΩ.

The moulded article can especially be conductive as a result of an addition of graphitic carbon.

The surface of the moulded article or the graft polymer or graft copolymer can carry functional groups that are customary and/or suitable for a chemical immobilisation and/or solid-phase synthesis of the captive compounds.

The functional groups can especially be hydroxyl and/or amino and/or carboxyl groups.

The moulded article can especially be provided with the capture compounds attached in covalent or adsorbtive or complexed form.

Furthermore, the surface of the moulded article can be provided with capture compounds in a density of at least 1 picomol/cm² and preferably from 1 picomol to 1 nanomol/cm².

Furthermore, the moulded article can be provided with at least one flat surface.

The moulded article can be a flat material.

A further embodiment of the invention relates to the use of a moulded article for a mass-spectroscopic analysis by means of matrix-assisted laser desorption/ionisation (MALDI).

A further embodiment of the invention relates to the use of a moulded article as a substrate for electrical measuring procedures.

A further embodiment of the invention relates to the use of a moulded article as a support for optical measuring procedures, especially for chemiluminescence or fluorescence measuring procedures.

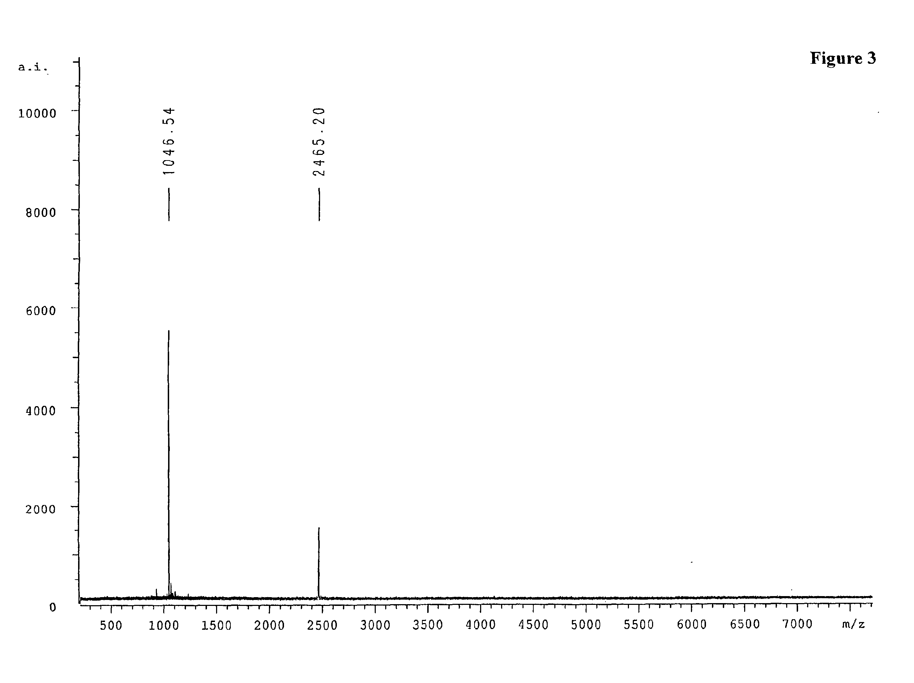

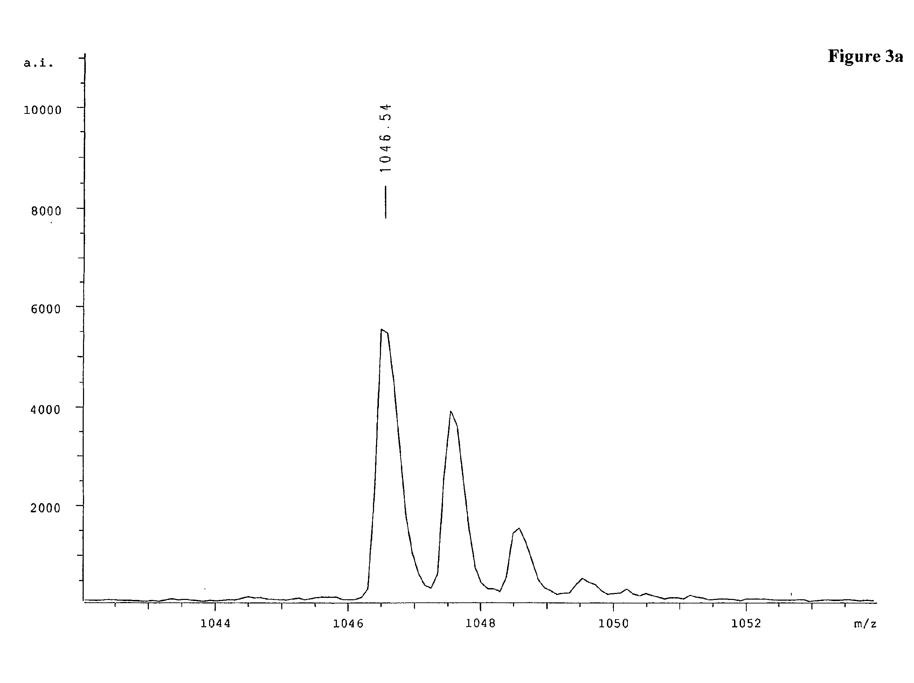

The aim of the invention was to harness the advantages of plastics materials for the use of correspondingly produced target moulded articles in MALDI-MS analysis. This aim was achieved by mixing graphitic carbon into the plastics starting material during the production of the moulded articles. Graphite is chemically inert and has no adverse effect on the quality of the chemical reactions with and on the surface of the moulded articles. Graphite itself is electrically conductive and at a surface resistance of 1 kΩ that property is transferred to the resulting plastics to a sufficient extent. This is documented here using the example of graphite-containing polypropylene moulded articles having a surface resistance of 1 kΩ which have been produced by a conventional injection-moulding process and optimised for the MALDI-MS analysis (Figure 3).

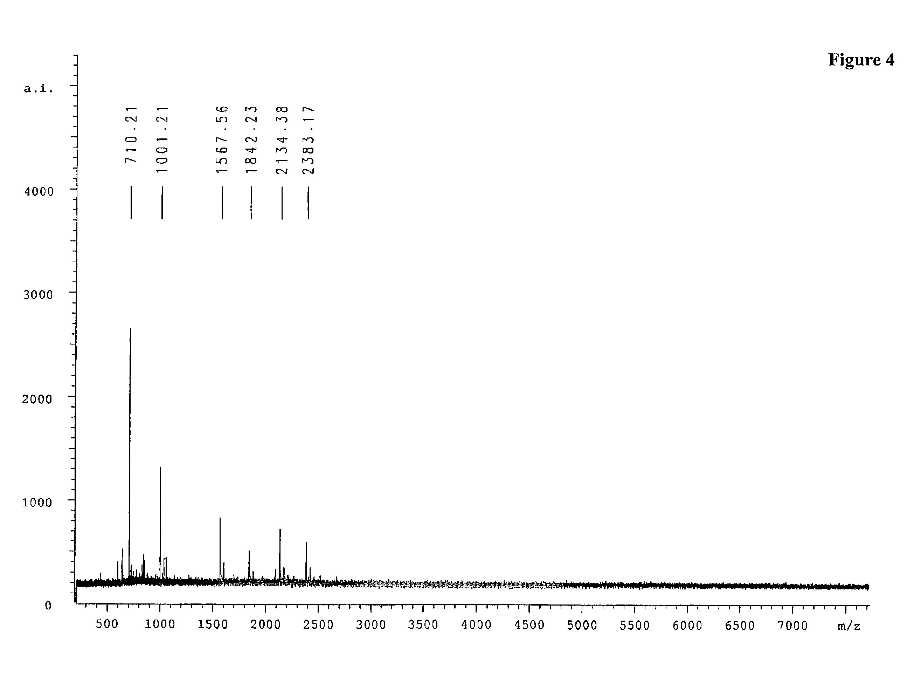

Material having a lower graphite content and a surface resistance of 1 MΩ is not suitable, however. The surface of the moulded articles was then provided with functional groups and used directly for immobilisation and synthesis processes. For increasing the capacity for capture molecules, a layer was produced by graft polymerisation, which layer was in turn suitably chemically functionalised and then used for the chemical synthesis of so-called peptide nucleic acids (PNAs). Figure 4 shows the MALDI analysis of a PNA synthesised on the modified moulded article.

The surface concentration of functional groups has an effect on the hydrophilicity of the surface. The higher the concentration, the greater normally is the hydrophilicity. High hydrophilicity results in a large surface area being wetted even by small volumes. Those surfaces are then unsuitable as MALDI targets, since the droplets containing the specimen solution become too widely distributed and the specimen thus becomes diluted. A comparison of a graphite-containing polypropylene moulded article with a non-graphite-containing polypropylene moulded article has surprisingly shown that on the graphite-containing polypropylene moulded article it is possible to achieve, by graft polymerisation, a surface concentration of functional groups that is higher by up to a factor of 3, but without droplets deposited on the surface being caused to run as a result of its hydrophilicity.

In addition to its use as a MALDI target, such a graphite-containing polymer moulded article modified with capture molecules can also be used advantageously as a substrate for electrical measuring procedures by virtue of its combination of electrical conductivity and the ease of modification with capture molecules. For an overview see, for example, "Redoxproteinschichten auf leitenden Träger-Systeme für bioelektronische Anwendungen", Willner, I., Katz, E. (2000) Angew. Chem. 112, 1230-1269.

In addition, such a graphite-containing polymer moulded article modified with capture molecules, by virtue of its black colour and the resulting low background signal, can be used advantageously as a support for optical measuring procedures based on, for example, chemiluminescence and fluorescence. Applications of those measuring methods in array technology have been described (Antibody arrays for high-throughput screening of antibody-antigen interactions, Wildt, R.M.T., Mundy, C. R., Gorick, B. D., Tomlinson, I. M., (2000) Nature Biotechnology, 18, 989-994; Microarray Biochip Technology, Schena, M. (Eds.), (2000), Eaton Publishing, Natrick).

### Modification of the graphite-containing polymer surface

For the synthesis or the covalent immobilisation of capture molecules it is necessary for functional groups to be produced on the surface of the plastics. The direct functionalisation of polymer surfaces with the aim of generating hydroxy or amino groups has already been described in detail in the patent "Vorrichtung zur effektiven Erzeugung von frei definierbaren Repertoires/Bibliotheken mit grossen Anzahlen von Ligand- und Akzeptorstrukturen zur kombinatorischen Synthese und zur ultraschnellen Testdurchführung in der biologischen, biochemischen, pharmazeutischen, medizinischen und chemischen Wirkstoffforschung" - Frank, R., Zander, N., Melberg, Y., Gausepohl, H., Schneider-Mergener, J., Adler, F., Türk, G. (applicant: ABIMED Analysen-Technik GmbH, GBF, Jerini BioTools GmbH, MediUm TECH GmbH) P (1) 98 18 999.0, PCT/EP99/02811 and the literature referred to therein). That patent mentions the following procedures, which can also be used for graphite-containing polymers:
1. oxidation of PP, PE, PMP with chromium trioxide, ozone, hydrogen peroxide/trifluoroacetic acid
2. elimination of fluoride from PVDF
3. reduction of PTFE, PCTFE with naphthalene/sodium or benzoin
4. hydrolysis of EVA
5. additional hydroboration of materials described under 1. to 3.
6. direct amination of PP, PE, PMP with radio-frequency plasma.

In addition thereto, using graft polymerisation a further functionalised polymer layer can be applied to the graphite-containing base polymer, the procedures described below having been employed successfully.
Especially suitable for the synthesis and immobilisation of capture molecules are surface modifications with primary amines. Reactions for the introduction of amino groups with the aid of carboxyl or hydroxyl functions are known ("Method for producing polymeric solid phase supporting materials" - Ulbricht, M., Volkmer-Engert, R., Germeroth, L., Wenschuh, H., (applicant: Jerini BioTools GmbH) PCT Application WO 00/12575; "Derivatisierte Polymermaterialen" - Frank, R., Matysiak, S. (applicant: GBF) P(1) 96 38 085.5, PCT/EP97/05123; US 269 002; EP 97 943 867.8; Korea 10-1999-7002279; Norway 99 1296; Australia 97.45 553).

### Graft polymerisation:

For an overview of the monomers used for the functionalisation of non-graphite-containing polymers by photopolymerisation see "Method for producing polymeric solid phase supporting materials" - Ulbricht, M., Volkmer-Engert, R., Germeroth, L., Wenschuh, H., (applicant: Jerini Biotools GmbH) PCT Application WO 00/12575. Such monomers are suitable for all graft polymerisation procedures mentioned below.

### 1. Initiated by irradiation with gamma-radiation

Polymer: PP/C, PE/C, PMP/C, PTFE/C, PA/C, FEP/C, ETFE/C
The general procedure using the example of non-graphite-containing PE as polymer and acrylic acid as monomer is described in Strategies for epitope analysis using peptide synthesis, Geysen, H.M., Rodda, S.J., Mason, T.J., Tribbeck, G., Schoof, P.G., (1987), Journal of Immunological Methods 102, 259-274.
A monomer or a mixture of monomers is dissolved in a solvent or a mixture of solvents. In an airtightly sealed container the moulded article is covered with a layer of the resulting solution or of a liquid monomer or a liquid mixture of monomers, all of which contain dissolved copper(II) salts, and is substantially freed of oxygen with a current of argon or nitrogen. The container is then irradiated with gamma-radiation. The moulded article is then washed and dried.

### 2. Initiated by irradiation with UV radiation

Polymer: PP/C, PE/C, PMP/C, PA/C, PS/C
For the general procedure for functionalising non-graphite-containing polymers by photopolymerisation see "Method for producing polymeric solid phase supporting materials" - Ulbricht, M., Volkmer-Engert, R., Germeroth, L., Wenschuh, H., (applicant: Jerini Biotools GmbH) PCT Application WO 00/12575.
For an overview of the photoinitiators used in graft polymerisation induced by UV radiation see Fouassier, J.-P., Photoinitiation, Photopolymerisation and Photocuring, Hanser Publishers, Munich, Vienna, New York, 1995. A monomer or a mixture of monomers is dissolved in a solvent or a mixture of solvents. In an airtightly sealed container, the moulded article is covered with a layer of the resulting solution or of a liquid monomer or a liquid mixture of monomers, all of which contain a photoinitiator or a mixture of photoinitiators, and is substantially freed of oxygen with a current of argon or nitrogen. The container is then irradiated with UV radiation. Alternatively a flat moulded article can be welded, without air bubbles, into a PE or PP pouch together with the mixtures mentioned above, which need not be freed of oxygen, and then irradiated as indicated above. The moulded article is then washed and dried.

### 3. Initiated by thermal decomposition of peroxides/hydroperoxides/ozonides formed by treatment with ozone

Polymer: PP/C, PE/C, PMP/C, PA/C, PS/C
The formation of polymerisation-initiating free radicals or free radical precursors by the action of ozone on polymers is known (Ozone-induced Graft Polymerisation onto Polymer Surface, Fujimoto, K., Takebayashi, Y., Inoue, H., lkada, Y., Journal of Polymer Science : Part A : Polymer Chemistry, (1993), 31, 1035-1043).
A current of a gas mixture of ozone in air or oxygen is caused to flow around the moulded article. The moulded article is then substantially freed of dissolved ozone *in vacuo.* A monomer or a mixture of monomers is dissolved in a solvent or a mixture of solvents. In an airtightly sealed container, the moulded article is covered with a layer of the resulting solution or of a liquid monomer or a liquid mixture of monomers, all of which contain dissolved copper(II) salts, and is substantially freed of oxygen with a current of argon or nitrogen. The container is then heated to temperatures above 60°C. The moulded article is then washed and dried.

### 4. Initiated by thermal decomposition of peroxides/hydroperoxides/carbon free radicals formed by treatment with gamma-radiation

Polymer: PP/C, PE/C, PMP/C, PTFE/C, PA/C, FEP/C, ETFE/C
The formation of polymerisation-initiating free radicals or free radical precursors by the action of gamma-radiation on polymers is known (Greffage de l'acide acrylique et du styrene sur des films de polytetrafluoroethylene preirradie en presence d'air, Chapiro, A., Derai, G., Europ. Poly. J. (1971), 7, 1595-1613). The graft polymerisation of such irradiated surfaces corresponds in terms of procedure to the graft polymerisation of ozone-treated polymers described in 3.

The moulded article is irradiated at about 20°C with gamma-radiation in air or in an atmosphere of nitrogen, argon or oxygen. A monomer or a mixture of monomers is dissolved in a solvent or a mixture of solvents. In an airtightly sealed container, the moulded article is covered with a layer of the resulting solution or of a liquid monomer or a liquid mixture of monomers, all of which contain dissolved copper(II) salts, and is substantially freed of oxygen with a current of argon or nitrogen. The container is then heated. The moulded article is then washed and dried.

The invention will be described in greater detail below with reference to Figures 1 to 5 and an example.
Figure 1: MALDI standard, mixture of angiotensin II and ACTH (18-39), pipetted onto the MALDI metal target:
   a) mixture of angiotensin II (human, C₅₀H₇₁N₁₃O₁₂, M = 1046.2 g/mol, 0.1 mg/ml) and adrenocorticotropic hormone fragment (18-39) (ACTH) (human, C₁₁₂H₁₆₅N₂₇O₃₆, M = 2465.7 g/mol, 0.2 mg/ml) dissolved in α-cyano-4-hydroxycinnamic acid in a 1:1 mixture of acetonitrile and water with an addition of 0.1 % TFA. Applied volume = 4 µl.
   b) 4 µl of the matrix solution of 10 mg/ml of α-cyano-4-hydroxy-cinnamic acid dissolved in a 1:1 mixture of acetonitrile and water with an addition of 0.1 % TFA.
Figure 1a: Enlargement of Figure 1: m/z 1040-1060
Figure 2: MALDI standard, mixture of angiotensin II and ACTH (18-39), applied to a MALDI target of unmodified polypropylene:
   a) mixture of angiotensin II (human, C₅₀H₇₁N₁₃O₁₂, M = 1046.2 g/mol, 0.1 mg/ml) and adrenocorticotropic hormone fragment (18-39) (ACTH) (human, C₁₁₂H₁₆₅N₂₇O₃₆, M = 2465.7 g/mol, 0.2 mg/ml) dissolved in α-cyano-4-hydroxycinnamic acid in a 1:1 mixture of acetonitrile and water with an addition of 0.1 % TFA. Applied volume = 4 µl.
   b) 4 µl of the matrix solution of 10 mg/ml of α-cyano-4-hydroxy-cinnamic acid dissolved in a 1:1 mixture of acetonitrile and water with an addition of 0.1 % TFA.
Figure 2a: Enlargement of Figure 2: m/z 1010-1230
Figure 3: MALDI standard, mixture of angiotensin II and ACTH (18-39), applied to a MALDI target of unmodified graphite-containing polypropylene:
   a) mixture of angiotensin II (human, C₅₀H₇₁N₁₃O₁₂, M = 1046.2 g/mol, 0.1 mg/ml) and adrenocorticotropic hormone fragment (18-39) (ACTH) (human, C₁₁₂H₁₆₅N₂₇O₃₆, M = 2465.7 g/mol, 0.2 mg/ml) dissolved in α-cyano-4-hydroxycinnamic acid in a 1:1 mixture of acetonitrile and water with an addition of 0.1 % TFA. Applied volume = 4 µl.
   b) 4 µl of the matrix solution of 10 mg/ml of α-cyano-4-hydroxy-cinnamic acid dissolved in a 1:1 mixture of acetonitrile and water with an addition of 0.1 % TFA.
Figure 3a: Enlargement of Figure 3: m/z 1040-1050
Figure 4: PNA 8-mer, synthesised on a modified graphite-containing polypropylene surface and measured after cleavage of the covalent bond to the surface with a gaseous reagent and subsequent mixing with matrix.
   4 µl of the matrix solution of 10 mg/ml of α-cyano-4-hydroxycinnamic acid dissolved in a 1:1 mixture of acetonitrile and water with an addition of 0.1 % TFA.

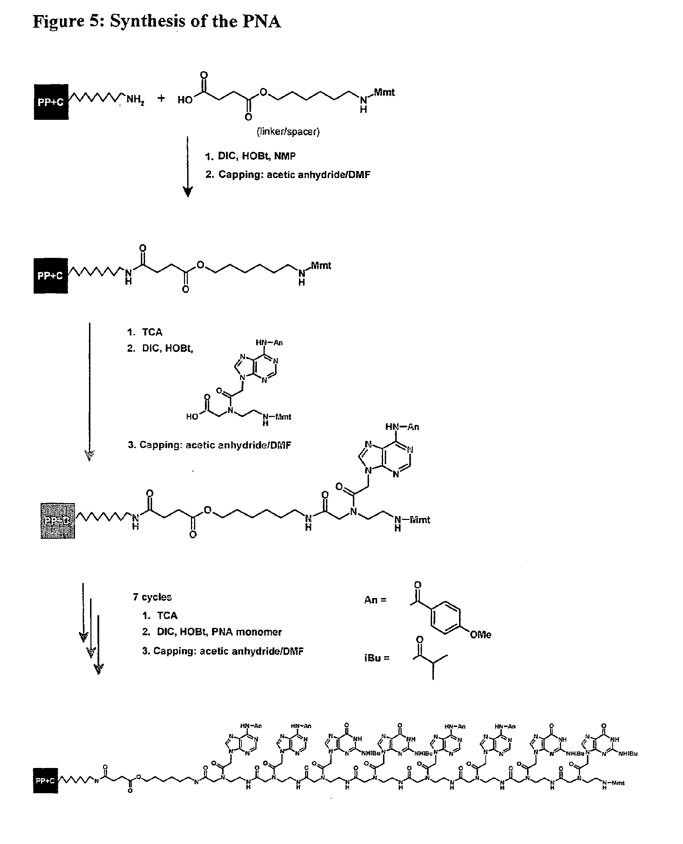

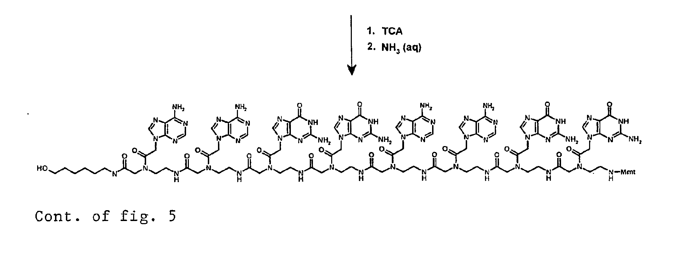

Figure 5: PNA 8-mer; AAGGAAGG, C₉₄H₁₁₉N₅₇O₂₁, mol. wt. = 2383.4 g/mol

### Example 1:

### a) Modification of the surface

An injection-moulded article of graphite-containing polypropylene having a surface resistance of 1 kΩ was modified in an airtightly sealed container with a solution of acrylic acid hydroxyethyl ester (Sigma-Aldrich Chemie GmbH, Taufkirchen, D) as described under 1. by graft polymerisation initiated by gamma-radiation in an irradiator OB29 (STS, Braunschweig, D) with a Cs¹³⁷ isotope and a dose output of 204.6 Gy/h. The moulded article was then washed with 1 N sodium hydroxide solution, 1 N hydrochloric acid, water and methanol in an ultrasound bath and dried in air at about 20°C. The hydroxyl functions applied to the surface were used as described in "Derivatisierte Polymermaterialen" - Frank, R., Matysiak, S. (applicant: GBF) P(1) 96 38 085.5, PCT/EP97/05123; US 269 002; EP 97 943 867.8; Korea 10-1999-7002279; Norway 99 1296; Australia 97.45 553) in order to introduce primary amino groups.

### b) Synthesis of the PNA with the sequence H₂N-GGAAGGAA-(CH₂)₆-OH on the aminated surface of the graphite-containing moulded article described under a).

The N-terminally monomethoxytrityl-(Mmt)-protected PNA building blocks used in the synthesis and the linker/spacer 6-((4-methoxyphenyl)-diphenytmethylamino)-hex-1-yl hemisuccinate is described in Will, Breipohl, Langner, Knolle, Uhlmann (1995) Tetrahedron, 12069-12082.
The course of the synthesis is shown in Figure 5. The synthesis began with a piece of graphite-containing polypropylene 1 cm x 1 cm x 0.2 cm in size and a surface resistance of 1 kΩ, which was aminated as described under a). In a polypropylene container, an N-methylpyrrolidone (NMP) solution of 0.2M linker/spacers, 0.34M hydroxybenzotriazole (HOBt) and 0.26M diisopropylcarbodiimide was prepared. After 30 minutes, 4 µl of the prepared solution were applied to the surface of the aminated piece of moulded article. The process was repeated twice more, each time after an interval of 30 minutes. The piece was then placed in a solution of 10 % acetic anhydride in DMF for 30 minutes, then washed twice each with DMF and ethanol and dried in air.
The PNA was synthesised on the resulting linker in stages. Each building block was linked in a sequence consisting of removal of the Mmt protecting group, neutralisation, reaction with activated PNA building block and capping of unreacted amino groups.
Removal of the Mmt protecting group: the piece of moulded article was shaken for 15 minutes in a solution of 3 % trichloroacetic acid (TCA) in dichloromethane (DCM) and then washed twice with DCM.
Neutralisation: the piece was shaken for 15 minutes in a solution of 20 % piperidine in DMF and then washed twice each with DMF and ethanol.
Reaction with activated PNA building block: in a polypropylene container, NMP solution was prepared from 0.2M PNA building block, 0.34M hydroxybenzotriazole (HOBt) and 0.26M diisopropylcarbodiimide. After 30 minutes, 4 µl of the prepared solution were applied to the surface of the aminated piece of moulded article. The process was repeated twice more, each time after an interval of 30 minutes.
Capping: The piece was then placed in a solution of 10 % acetic anhydride in DMF for 30 minutes, then washed twice each with DMF and ethanol and dried in air.
This reaction sequence was repeated a total of seven times more. Then in the course of 4 h at 80°C in an atmosphere over 33 % aqueous ammonia solution the protecting groups of the PNA building blocks and the ester bond in the linker/spacer were cleaved. As a result, the synthesis product remained absorbed at the site of synthesis, but it was no longer covalently linked to the surface.

### c) MALDI measurement

(i) General procedure for carrying out MALDI measurements
   4 µl of the specimen solution are applied to the MALDI target. The solution is then dried in air. 4 µl of the matrix solution of 10 mg/ml of α-cyano-4-hydroxy-cinnamic acid dissolved in a 1:1 mixture of acetonitrile and water with an addition of 0.1 % TFA are then added thereto. During drying, trituration is cautiously carried out until crystallisation begins. Then the droplets are completely blown dry. The measurements were carried out using a Bruker REFLEX II MALDI-TOF spectrometer. The measuring parameters are indicated on the printed-out spectra.
(ii) MALDI measurement for Example 1
   4 µl of a solution of 10 mg/ml of α-cyano-4-hydroxycinnamic acid in a 1:1 mixture of acetonitrile and water with an addition of 0.1 % TFA were applied to the piece of moulded article at the site where the PNA was synthesised. After drying in air, the specimen was measured. For measuring specimens on the modified graphite-containing polypropylene surface the moulded article was bonded to a metal MALDI support with Fixogum (Marabu, Tamm, D). The metal support was so processed, The measurements were carried out using a Bruker REFLEX II MALDI-TOF spectrometer. The measuring parameters are indicated on the printed-out spectra.

## Claims

1. Use of an electrically conductive moulded article based on plastics containing graphitic carbon and/or metal powder, wherein the entire mass of the moulded article is conductive, and wherein the surface of the moulded article carries capture compounds in a density of at least 1fmol/cm² for the investigation of biomolecules.

2. Use according to claim 1, wherein the surface of the moulded article carries a graft polymer or a graft copolymer carrying the capture compounds.

3. Use according to claim 1 or 2, wherein the moulded article consists of plastics.

4. Use according to at least one of claims 1 to 3, wherein the plastics is a polymer based on polypropylene (PP), polyethylene (PE), polystyrene (PS), polysulfone, polytetrafluoroethylene (PTFE, Teflon), polyester (PE), polycarbonate (PC), polyamide (PA) and/or polymethylpentene (PMP).

5. Use according to claim 4, wherein the plastics is polypropylene and/or polystyrene and/or polyamide.

6. Use according to at least one of the preceding claims, wherein the moulded article has a surface resistance of less than 1 MΩ.

7. Use according to claim 6, wherein the moulded article has a surface resistance of less than 100 kΩ or of less than 10 kΩ or of not more than 1 kΩ or of less than 1 kΩ.

8. Use according to at least one of the preceding claims, wherein the moulded article is conductive as a result of an addition of graphitic carbon.

9. Use according to at least one of claims 1 to 6, wherein the surface of the moulded article or graft polymer or graft copolymer carries functional groups that are customary and/or suitable for a chemical immobilization and/or solid-phase synthesis of the capture molecules.

10. Use according to at least one of claims 1 to 8, wherein the functional groups are hydroxyl and/or amino and/or carboxyl groups.

11. Use according to at least one of claims 1 to 8, wherein the moulded article is provided with the capture compounds attached in covalent or adsorbtive or complexed form.

12. Use according to at least one of the preceding claims, wherein the surface of the moulded article is provided with capture compounds in a density of at least 1 picomol/cm² and preferably from 1 picomol to 1 nanomol/cm².

13. Use according to at least one of the preceding claims having at least one flat surface.

14. Use according to claim 12 in the form of flat material.

15. Use according to at least one of the preceding claims for a mass-spectroscopic analysis by means of matrix-assisted laser desorption/ionization (MALDI).

16. Use according to at least one of the preceding claims as a substrate for electrical measuring procedures.

17. Use according to at least one of the preceding claims as a support for optical measuring procedures.

18. Use according to claim 17 for chemiluminescence or fluorescence measuring procedures.

## Patentansprüche

1. Verwendung eines elektrisch leitfähigen Formkörpers auf Basis von Kunststoff, wobei der Formkörper graphitischen Kohlenstoff und/oder Metallpulver aufweist, die gesamte Masse des Formkörpers leitfähig ist, und wobei die Oberfläche des Formkörpers Fängerverbindungen in einer Dichte von mindestens 1 fmol/cm² zur Untersuchung von Biomolekülen trägt.

2. Verwendung nach Anspruch 1, wobei die Oberfläche des Formkörpers ein Pfropfpolymer oder Pfropfcopolymer trägt, dass die Fängerverbindungen trägt.

3. Verwendung nach Anspruch 1 oder 2, wobei der Formkörper aus Kunststoff besteht.

4. Verwendung nach mindestens einem der Ansprüche 1 bis 3, wobei es sich bei dem Kunststoff um ein Polymer auf Basis von Polypropylen (PP), Polyethylen (PE), Polystyrol (PS), Polysulfon, Polytetrafluorethylen (PTFE, Teflon), Polyester (PE), Polycarbonat (PC), Polyamid (PA) und/oder Polymethylpenten (PMP) handelt.

5. Verwendung nach Anspruch 4, wobei es sich bei dem Kunststoff um Polypropylen und/oder Polystyrol und/oder Polyamid handelt.

6. Verwendung nach mindestens einem der vorhergehenden Ansprüche, wobei der Formkörper einen Oberflächenwiderstand von kleiner 1 MQ besitzt.

7. Verwendung nach Anspruch 6, wobei der Formkörper einen Oberflächenwiderstand von kleiner 100 kΩ oder von kleiner 10 kΩ oder von nicht mehr als 1 kΩ oder von kleiner 1 kΩ besitzt.

8. Verwendung nach mindestens einem der vorhergehenden Ansprüche, wobei der Formkörper durch einen Zusatz von graphitischem Kohlenstoff leitfähig ist.

9. Verwendung nach mindestens einem der vorhergehenden Ansprüche 1 bis 6, wobei die Oberfläche des Formkörpers oder das Pfropfpolymer oder Pfropfcopolymer funktionelle Gruppen trägt, die für eine chemische Immobilisierung und/oder Festphasensynthese der Fängermoleküle geeignet und/oder üblich sind.

10. Verwendung nach mindestens einem der Ansprüche 1 bis 8, wobei es sich bei den funktionellen Gruppen um Hydroxyl- und/oder Amino- und/oder Carboxyl-Gruppen handelt.

11. Verwendung nach mindestens einem der Ansprüche 1 bis 8, wobei der Formkörper mit den Fängerverbindungen kovalent oder adsorptiv oder komplexiert versehen ist.

12. Verwendung nach mindestens einem der vorhergehenden Ansprüche, wobei die Oberfläche des Formkörpers mit Fängerverbindungen in einer Dichte von mindestens 1 Picomol/cm² und vorzugsweise 1 Picomol bis 1 Nanomol/cm² versehen ist.

13. Verwendung nach mindestens einem der vorhergehenden Ansprüche mit mindestens einer flachen Fläche.

14. Verwendung nach Anspruch 13 als Flachmaterial.

15. Verwendung nach mindestens einem der vorhergehenden Ansprüche für eine massenspektroskopische Analyse mittels Matrix-Assisted-Laser-Desorption-Ionisation (MALDI).

16. Verwendung nach mindestens einem der vorhergehenden Ansprüche als Unterlage für elektrische Messverfahren.

17. Verwendung nach mindestens einem der vorhergehenden Ansprüche als Träger für optische Messverfahren.

18. Verwendung nach Anspruch 17 für Chemilumineszenz- oder Fluoreszenz-Messverfahren.

## Revendications

1. Utilisation d'un article moulé électriquement conductible basé sur une matière plastique contenant de la poudre de métal et/ou carbone graphitique, où la masse totale de l'article moulé est conductible et où la surface de l'article moulé porte des composés de capture dans une densité d'au moins 1 fmol/cm² pour l'investigation de biomolécules.

2. Utilisation selon la revendication 1, dans laquelle la surface de l'article moulé porte un polymère greffé ou un copolymère greffé portant les composés de capture.

3. Utilisation selon la revendication 1 ou 2, dans laquelle l'article moulé est composé de matière plastique.

4. Utilisation selon au moins une des revendications 1 à 3, dans laquelle la matière plastique est un polymère à base de polypropylène (PP), polyéthylène (PE), polystyrène (PS), polysulfone, polytétrafluoréthylène (PTFE, Téflon), polyester (PE), polycarbonate (PC), polyamide (PA) et/ou polyméthylpentène.

5. Utilisation selon la revendication 4, dans laquelle la matière plastique est du polypropylène et/ou polystyrène et/ou polyamide.

6. Utilisation selon au moins une des revendications précédentes, dans laquelle l'article moulé a une résistance superficielle inférieure à 1 MΩ.

7. Utilisation selon la revendication 6, dans laquelle l'article moulé a une résistance superficielle inférieure à 100 kΩ ou inférieure à 10 kΩ ou non supérieure à 1 kΩ ou inférieure à 1 kΩ.

8. Utilisation selon au moins une des revendications précédentes, dans laquelle l'article moulé est conductible en conséquence d'un ajout de carbone graphitique.

9. Utilisation selon au moins une des revendications 1 à 6, dans laquelle la surface de l'article moulé ou le polymère greffé ou copolymère greffé porte des groupes fonctionnels qui sont usuels et/ou adaptés pour une immobilisation chimique et/ou une synthèse de phase solide des molécules de capture.

10. Utilisation selon au moins une des revendications 1 à 8, dans laquelle les groupes fonctionnels sont des groupes hydroxyles et/ou amino et/ou carboxyle.

11. Utilisation selon au moins une des revendications 1 à 8, dans laquelle l'articule moulé est muni des composés de capture fixés sous forme covalente ou adsorbante ou complexée.

12. Utilisation selon au moins une des revendications précédentes, dans laquelle la surface de l'élément moulé est pourvue de composés de capture dans une densité d'au moins 1 picomol/cm² et de préférence de 1 picomol à 1 nanomol/cm².

13. Utilisation selon au moins une des revendications précédentes ayant au moins une surface plate.

14. Utilisation selon la revendication 13 sous la forme d'un matériau plat.

15. Utilisation selon au moins une des revendications précédentes pour une analyse spectroscopique de masse au moyen d'une désorption-ionisation laser assistée par matrice.

16. Utilisation selon au moins une des revendications précédentes comme un substrat pour des procédures de mesures électriques.

17. Utilisation selon au moins une des revendications précédentes comme un support pour des procédures de mesures optiques.

18. Utilisation selon la revendication 17 pour des procédures des mesures de chimiluminescence ou fluorescence.
